# EUROPEAN PATENT APPLICATION

(11) **EP 0 992 898 A1**
(43) Date of publication of application: **12.04.2000**
(21) Application number: 99108470.8
(22) Date of filing: 30.04.1999
(51) Int. Cl.: G06F 9/44

(54) **Using a namespace extension to selectively display files read from a computer readable drive**

(30) Priority: 21.09.1998 US 157887
(71) Applicant: Hewlett-Packard Company, Palo Alto, California 94304 (US)
(72) Inventor: Schwols, Keith, Fort Collins, CO 80526 (US)
(74) Representative: Schoppe, Fritz, Dipl.-Ing.

(57) **Abstract**

A computer implemented method of and apparatus for selecting files for display to a computer monitor through the use of namespace extensions. An initiation file (200) is stored in the root directory (208, 214) of the namespace (204, 210) and contains a unique class I.D. (202) that is used to access a registry key (304) in the computer registry (302) of a hard drive. The registry key accesses a dynamic-link library (100) which is loaded into memory where its code is made available for execution. An executable object (104) of the dynamic-link library containing the interfaces (102, 116, 108, 112, 106, 110, 114) and methods (500, 508, 538, 534, 524, 512, 510, 520, 548, 506, 504) to read and select files for processing is loaded and executed. The files are then displayed to a computer monitor.

## Description

### FIELD OF THE INVENTION

The present invention relates to the field of computer processing methods, and more particularly to a method of and apparatus for selecting files read from a computer readable drive for display to a computer monitor.

### BACKGROUND OF THE INVENTION

The success of computers in the management of business and personal affairs can easily be attributed to the computer's efficiency, adaptability, and manageability. Standard features like directories assist users in organizing the multitude of computer files that seem to multiply like rabbits. Files are constantly created when an application is installed or executed, and only some of these files are meaningful to the user. For example, a given application might include an executable file, one or several data files, and several program files. When the application is installed, all of these files may be stored in the same directory. In an application that accumulates countless files in its lifetime, normal access to the directory can potentially flood the user with information and cause the user to inadvertently select a wrong file or application.

One solution to this problem is to tag non-user relevant files as "hidden" using, for example, a Microsoft Windows ® utility called "File Attributes". In older versions of Microsoft Windows ®, a file that was designated as "hidden" was automatically excluded from being displayed. In subsequent versions, like Microsoft Windows 95 ®, a file must be tagged as "hidden" and the operating system must be explicitly told to exclude "hidden" files. This additional step requires the user to go into another Microsoft Windows ® utility called Display Options and select "hidden files." When a directory is accessed, i.e. asked to display its contents, a normal system call will read each file and its attributes and only display those files that are not tagged with the "hidden" attribute. A disadvantage of this method is that it tends to undermine data integrity because the tools for implementing this method, i.e. File Attributes and Display Options, are easily accessed and manipulated by a user.

Another solution is to hide non-user relevant files based on file extensions. File extensions are used to differentiate between file types. For example, an executable file might have the extension .*exe,* an initiation file might have the extension *.ini,* and a user data file might have the extension *.dta.* To implement this solution, a user enters the Display Options utility to select those file extensions to exclude when files are displayed. When a directory is accessed, a normal system call will read each file and its attributes, and display only those files with extensions that are not selected for exclusion in Display Options. However, because the number of available file extensions is limited, and it is often desirable to preserve a large number of file extensions for an end-user's use, software developers who might take advantage of Microsoft ® file utilities to hide certain files may feel pressure to limit their use of hidden file extensions to those already listed in the Display Options as hidden, and may therefore be constrained in creating hidden files with customized extensions. As with the "hidden" attributes solution, another disadvantage of this method is that it also tends to undermine data integrity because of the ease of accessibility of Display Options.

As a result, there is a need for an apparatus and a method of selecting files for display that will prevent users from overriding system properties, and that gives software developers the flexibility to use custom file extensions.

### SUMMARY OF THE INVENTION

The current invention addresses this need by bypassing the use of a normal system call and instead, using the concept of a namespace extension to select files for display.

A namespace is a collection of folders and/or files. Hard drives, removable media drives, and directories are all namespaces because they are a collection of folders and files. In Windows ®, queries about the contents of a namespace can be satisfied by a normal system call or by reference to a namespace extension, with the results of the query being displayed in Microsoft Windows Explorer ® (hereinafter Explorer ®), which is a tool that enables users to locate and open files and folders. A normal system call accesses the table of contents for the particular namespace being queried and displays the contents of the namespace, filtering out any files with hidden attributes or excluded extensions. On the other hand, a namespace extension is a program that interrupts a normal system call in order to display something other than the actual contents of predetermined namespaces. In Windows 95 ®, these predetermined namespaces are limited to root directories of hard drives, and virtual drives. A namespace extension is created by the Windows 95 ® operating system for each of these predetermined namespaces, and is unique to its namespace.

Since namespace extensions are custom programs, the user's ability to override pre-defined hidden file types is restricted, and software developers have the flexibility of using custom file extensions since they are not limited to the system's pre-defined extensions.

Namespace extensions are currently used by the Windows 95 ® operating system so that the operating system may display something other than the actual contents of a namespace to a user. For example, the Recycle Bin ® directory of Microsoft Explorer ® is controlled by a namespace extension. The Recycle Bin ® is a namespace that contains files that have been deleted. While the contents of each file remain the same as the originally deleted file, the original file name is replaced with a file number. The Recycle Bin ® additionally has an information file that maintains statistical data about the deleted files, including the location, size, and a cross-reference of the file number to the original file name. Lastly, the Recycle Bin ® contains an initiation file called "desktop.ini" which provides the computer with the necessary information to intercept the normal system call and to implement the instructions in the namespace extension.

Where a normal system call would display each numbered file, the information file, and the initiation file, the namespace extension for Recycle Bin ® instructs the computer to display each deleted file by its original file name, as well as to hide the information and initiation files. Each deleted file, however, contain*s information* about the originally deleted file, such as the location and size of it, rather than the *actual data contents* of the deleted file. (The *information* for each file is obtained from the information file.) For example, if a file named File1.txt located in C:\Documents\File1.txt is deleted from a directory, the system automatically dumps it into the Recycle Bin ® directory. The actual contents of that directory, C:\RECYCLED, would include 1070.txt which is the deleted file in enumerated form where the number itself can be arbitrary; "info.dat", the information file that includes information such as the original location (C:\Documents), original filename (File1.txt), and other attributes of File1.txt; and "desktop.ini" the initiation file. However, if a user queries the contents of Recycle Bin ® by clicking on its namespace (or directory) in Explorer ®, the user would only see File1.txt. Double clicking on File1.txt would provide various informational data about the file, such as the location from which it was deleted, its size, and properties, rather than the data that was originally in the file.

Namespace extensions, as used in the manner described above, are currently used to display something other than the actual contents of a hard drive or virtual drive (i.e. they are used to display a custom view of files). One aspect of the present invention is that it uses namespace extensions to *select* actual files rather than *create* custom views of files. In reference to the Recycle Bin ® directory as an example, the present invention might use a namespace extension to only display deleted files that were deleted after a certain date. Assuming, in our example above, that the file 1070.txt was within the specified date range, a customized namespace extension could be created to display 1070.txt, and to hide any files that are not within that date range. Additionally, the contents of this file would be the *actual data contents* rather than the statistical data provided by the information file. Another aspect of the present invention is that namespace extensions are used to select files from any computer readable drive for display, including removable media drives. Thus, where an application and its files are stored on an external CD-ROM, for example, a namespace extension can be used to select which files to display from the CD-ROM.

In a preferred embodiment of the present invention, application files are read from a removable media drive and selected for display to a computer monitor. This embodiment is accomplished using Microsoft Windows 95 ® where a custom program, the namespace extension, determines the contents of a namespace that may be selected for processing, rather than normal system calls. For any namespace that is accessed, such as a removable media drive, Windows 95 ® will bypass a normal system call if an *initiation file* is detected which properly references a *registry key.* The registry then executes *a dynamic-link library,* which will select files and display them to Microsoft Explorer ®.

Other details, objectives, and advantages will be explained in further detail, or become apparent, in the following description, drawings, and claims.

### BRIEF DESCRIPTION OF THE DRAWINGS

Illustrative and presently preferred embodiments of the invention are illustrated in the drawings, in which:
FIGURE 1 illustrates a namespace extension object, including its dynamic-link library and interfaces;
FIGURE 2 illustrates the processing of an initiation file;
FIGURE 3 illustrates the processing of a registry key;
FIGURE 4 provides an overview of an initiation file to dynamic-link library process; and
FIGURE 5A illustrates a dynamic-link library, its interfaces, and methods; and FIGURE 5B illustrates a DLL object, its interfaces, and methods.

### DETAILED DESCRIPTION OF PREFERRED EMBODIMENT

In a preferred embodiment of the present invention, a computer application is created on a removable media drive, and files associated with and created by the application that are stored on the removable drive are selected for display to a computer monitor. When the drive is accessed, the invention will bypass a normal system call to filter out non-user relevant files and display only those files that a user can access. The invention is implemented by creating an initiation file containing a class I.D., a registry key that is identical to the class I.D., and a dynamic-link library, including its executable object, interfaces, and methods. The initiation file is called "desktop.ini" and is uniquely associated and stored with the application on the removable media drive. "Desktop.ini" contains a unique numeric class I.D. that corresponds to an identical number in the computer registry on the hard drive. The identical number is called the registry key and points to a dynamic-link library, which contains the instructions that select and display the files. In this embodiment, Microsoft Windows 95 ® is the operating system that determines whether a normal system call will be made when a namespace is queried or whether a namespace extension has been properly implemented in order to execute it. The results of the query are then displayed in Microsoft Windows Explorer ®.

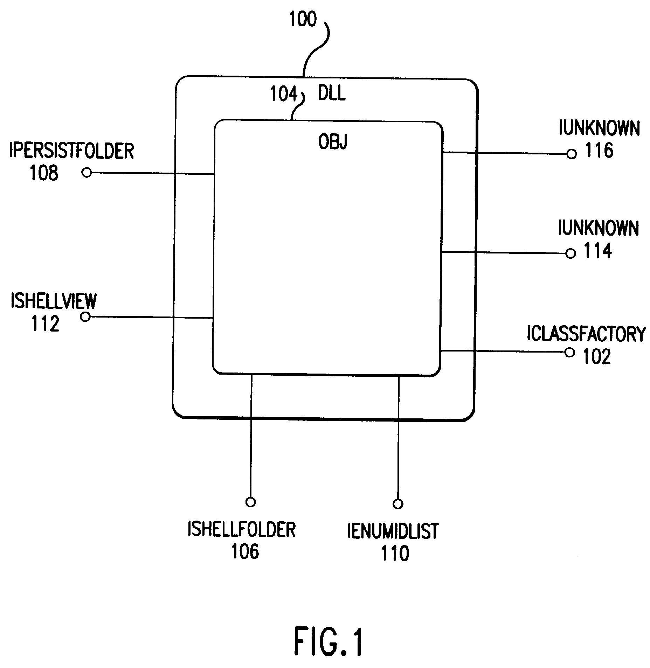

A namespace extension, FIGURE 1, comprises:
a dynamic-link library 100, which is an executable routine stored as a file with the extension *.dll* that contains other executable routines;
interfaces 102, 116 implemented by the dynamic-link library, and all methods defined by these interfaces;
an executable object 104 of the dynamic-link library; and
interfaces 106, 108, 110, 112, 114 implemented by the executable object, and all methods defined by these interfaces.

The dynamic-link library and executable object are both COM (Component Object Modeling) objects, Microsoft's specification for building software components using pre-defined interfaces. Every object can have at least one interface and every interface can provide access to one or more methods, or functions, defined by the interface. The premise of COM is that anytime a COM object implements a given interface and provides access to the object through the interface, the user of that object can assume that the interface and all methods within the interface are supported and retain their defined semantics.

The dynamic-link library is a COM object that implements the IClassFactory interface 102 and its methods. The executable object of the dynamic-link library is a COM object that implements the IShellFolder 106, IPersistFolder 108, IEnumIDList 110, and IShellView 112 interfaces and their respective methods. In addition, both COM objects implement the IUnknown interface 114, 116, which is a standard interface that manages object allocation. IUnknown is implemented by every COM object, and every interface of a COM object is based on the IUnknown interface.

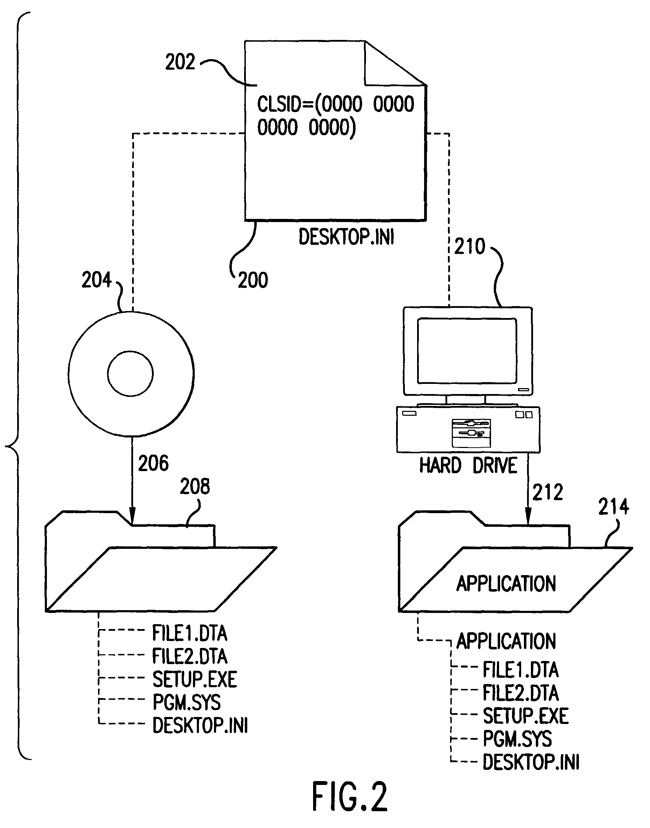

The initiation file, FIGURE 2, is created and stored in the root directory of a namespace. For example, if the namespace is a CD-ROM 204, then the initiation file must be installed 206 in the root directory 208 of the CD. If the namespace is a directory on a computer hard drive 210, for example, "APPLICATION", then the initiation file must be installed 212 in that directory 214. Where the namespace is a removable media drive, as in a preferred embodiment, the initiation file is installed outside of all subdirectories. In a preferred embodiment, the initiation file is called "desktop.ini" 200 and contains, among other information, a unique identifier called a class I.D. 202.

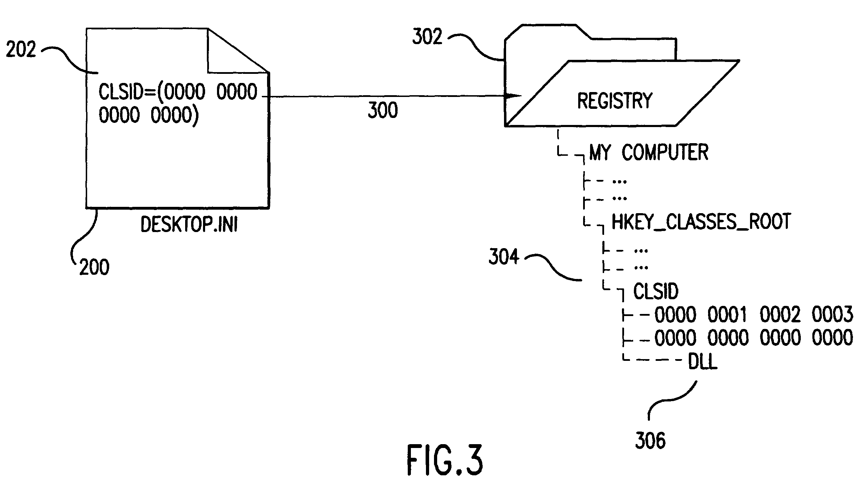

As illustrated in FIGURE 3, the class I.D. 202 of the initiation file 200 is registered 300 in the computer registry 302 of the computer hard drive. The registry is a central hierarchical database in Windows 95 ® used to store information necessary to configure the system for one or more users, applications, and hardware devices. In a preferred embodiment, all class I.D. keys in the system are stored in the directory *My Computer*\*HKEY_CLASSES_ROOT\CLSID* of the computer's main hard drive. This directory holds, among other things, a list of class I.D.'s 304 and their corresponding dynamic-link libraries 306.

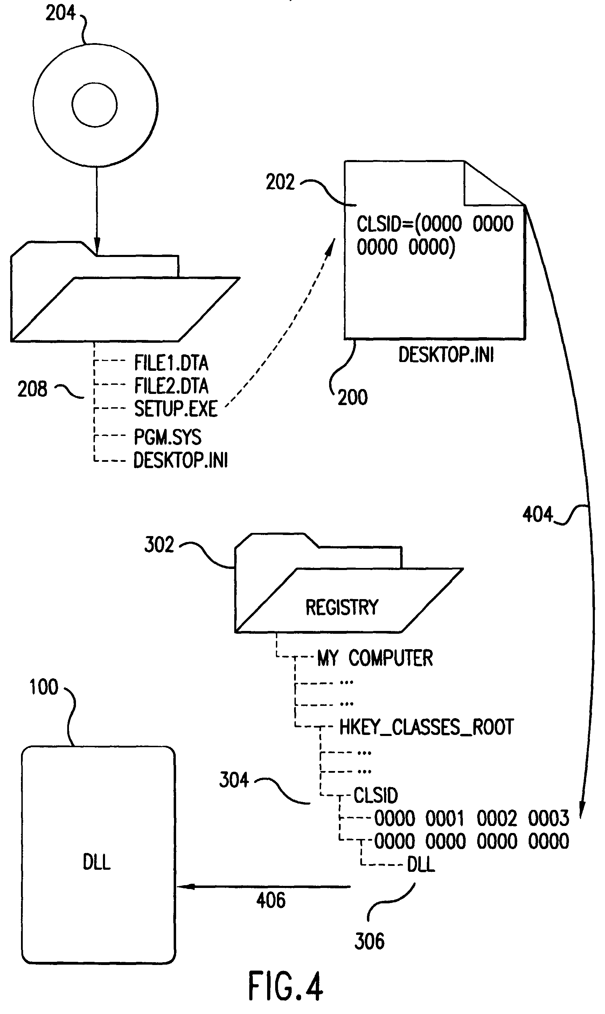

As depicted in FIGURE 4, when a namespace such as a CD-ROM 204 is queried, the operating system first searches for an initiation file called "desktop.ini" in the root directory 208 of the namespace. If it does not find the initiation file, the operating system will resort to normal system calls to display files to Explorer ®. Otherwise, it looks for a class I.D. 202 in "desktop.ini". If it finds a class I.D. there, it uses the class I.D. to search 404 the registry 302 for a registry key 304 identical to the class I.D. If the registry key is associated with a dynamic-link library 306, Windows 95 ® loads 406 the DLL 100 into memory, and makes its code available for execution.

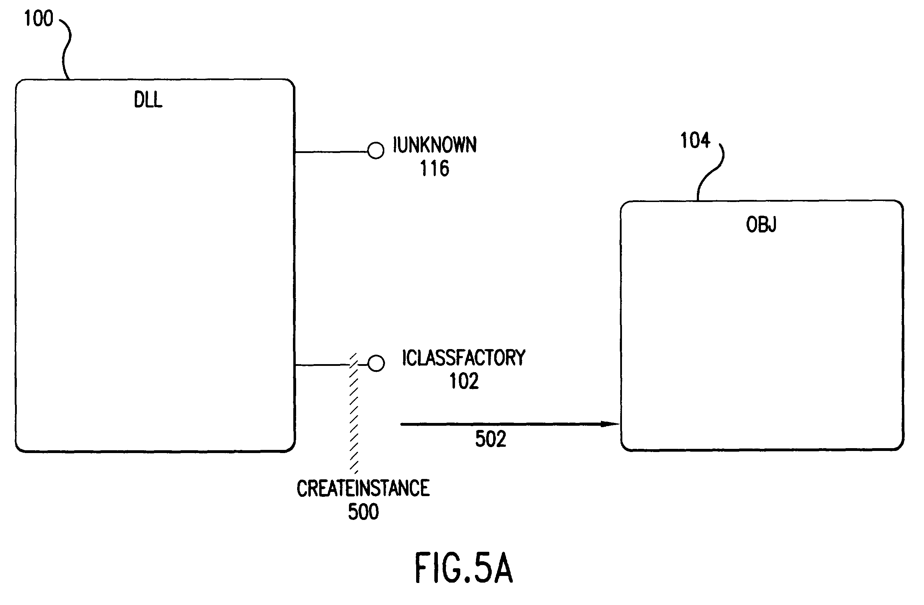

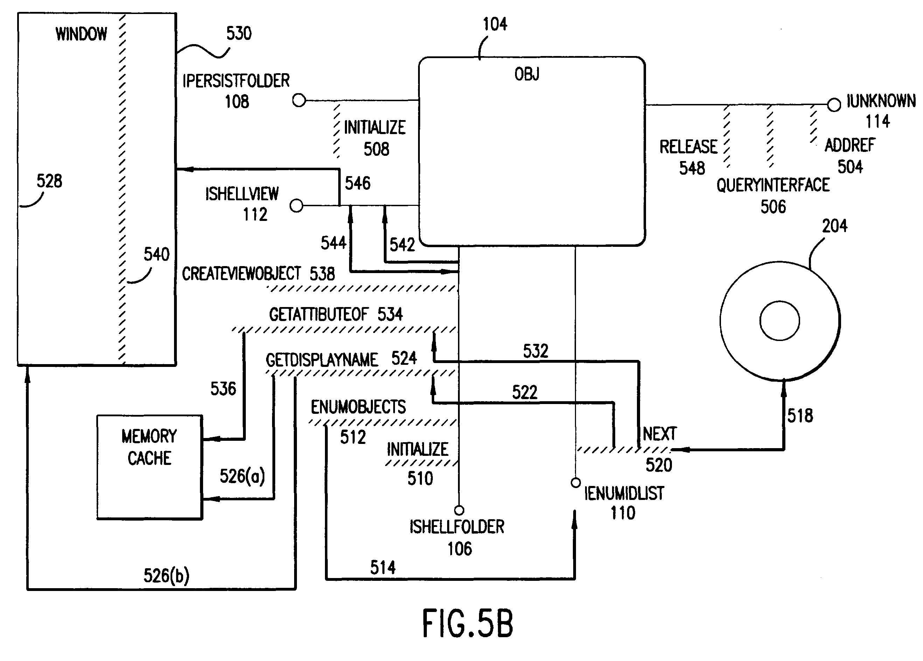

FIGURES 5A and 5B illustrate how the operating system processes the namespace extension once the DLL is loaded into memory. In FIGURE 5A, Windows 95 ® calls the CreateInstance method 500 of the IClassFactory interface 102 implemented by the DLL 100 and passes in the class I.D. (which was obtained from the initiation file) to this method. The CreateInstance method searches for an executable object of the class I.D. and returns 502 the object 104 of that class I.D. Windows 95 ® then loads the executable object into memory.

In FIGURE 5B, Windows 95 ® calls the AddRef method 504 of the object's IUnknown interface 114 to allocate the use of the object to the operating system. The QueryInterface method 506 is then called to determine if the proper namespace extension interfaces are implemented by the object, namely, IShellFolder 106, IPersistFolder 108, IEnumIDList 110, and IShellView 112. If the object implements these interfaces, QueryInterface returns pointers to these interfaces which Windows 95 ® uses to find and load the interfaces. Windows 95 ® then calls the Initialize method 508 on IPersistFolder 108 and the Initialize method 510 on IShellFolder 106, followed by calling the EnumObjects method 512 of IShellFolder 106. The EnumObjects method returns 514 the IEnumIDList interface 110 and delegates namespace processing to this interface. Windows 95 ® then calls the Next method 520 of IEnumIDList 110 which reads 518 the namespace 204 for files and determines whether the file should be displayed for the user. The Next method 520 returns 518 these files and file I.D.'s that are used internally to the namespace. The I.D. is passed 522 to the GetDisplayName method 524 of IShellFolder 106 which retrieves from IEnumIDList 110 a string that corresponds to the name of the folder or file. If the string corresponds to a file, the string is cached 526(a) in memory 550 for the queried namespace. If the string corresponds to a folder, the string is returned 526(b) to the tree view 528 (left pane) of Windows Explorer ® window 530. The I.D. is also passed 532 to the GetAttributeOf method 534 of IShellFolder 106 which retrieves attributes of the file, for example, if it is a writable, deletable, or hidden file. These attributes are cached 536 in memory 550 and stored with its corresponding file. This process is repeated until the Next method 520 returns an error code indicating there are no more folders or files to be read.

After the folders and files are enumerated for the tree view, Windows Explorer ® calls the CreateViewObject method 538 of IShellFolder 106 to create a list view 540 (right pane) of the Windows Explorer ® window 530. The CreateViewObject method 538 creates the IShellView interface 112 which is responsible for displaying data from the queried namespace to the right pane of the window. CreateViewObject passes 542 the handle of the current namespace to IshellView 112. IShellView 112 then queries 544 IShellFolder for the files cached in the namespace memory and uses logic similar to the logic of the Next method to determine whether the file should be displayed. If the file is not filtered out by IShellView, the file is returned 546 to the list view. This process is repeated until there are no more files to be read from the namespace memory 550. When all folders and files have been read and/or displayed for the queried namespace, Microsoft Windows 95 ® calls the Release method 548 of the IUnknown interface 114 on the object to release the object.

While an illustrative embodiment of the invention has been described in detail herein, such embodiment is not intended to be exhaustive. Moreover, it is intended that there are, and may be in the future, variations of the illustrated embodiment, and that the claims following this discussion are meant to embody such variations.

## Claims

1. A computer implemented method of determining which files stored in a namespace (204, 210) will be selected for processing when the namespace is accessed by a user, comprising:
a. creating an initiation file (200) comprising a unique class I.D. (202), in a root directory (208, 214) of the namespace;
b. creating a namespace extension and storing the namespace extension on a computer hard drive, the namespace extension comprising:
i. a dynamic-link library (100) and an executable object (104), the executable object comprising program code for:
A) reading files stored in the namespace; and
B) selecting predetermined ones of the files for processing;
c. creating a registry key (304) in a registry (302) stored on the computer hard drive, the registry key being:
i. associated with the unique class I.D.; and
ii. associated with a namespace extension;
d. the initiation file intercepting an operating system's call to the namespace and using the unique class I.D. to access the registry key; and
e. calling the dynamic-link library and executing the executable object when the registry key is accessed.

2. A method as in claim 1, comprising processing the predetermined ones of the files for display to a computer monitor.

3. A method as in claim 1, wherein the namespace extension is created by program code stored on a computer readable, removable media.

4. A method as in claim 1, wherein the namespace (204, 210) is stored on a computer readable, removable media.

5. A computer readable, removable media, comprising:
a. files stored thereon; and
b. an initiation file (200) comprising a unique class I.D. (202) referencing a registry key (304) stored on a computer hard drive, which registry key causes an operating system to access a namespace extension that will cause selected ones of the files stored on the removable media to be displayed to a user.

6. Apparatus for determining which files stored in a namespace (204, 210) will be selected for processing when the namespace is accessed by a user, comprising a computer readable, removable media, the removable media comprising:
a. a namespace extension for causing selected ones of the files stored in the namespace to be displayed to a user, comprising:
i. a dynamic-link library (100);
ii. an executable object (104); and
iii. all interfaces (102, 116, 108, 112, 106, 110, 114) and methods (500, 508, 538, 534, 524, 512, 510, 520, 548, 506, 504) of the dynamic-link library and the executable object;
b. an initiation file (200) comprising a unique class I.D. (202) referencing a registry key (304), which registry key causes an operating system to access the namespace extension when the namespace is accessed by a user;
c. program code for writing the registry key in a registry (302) stored on a computer hard drive; and
d. program code for installing the namespace extension on the computer hard drive.

7. A method as in claim 6, comprising processing the predetermined ones of the files for display to a computer monitor.

8. Apparatus as in claim 6, wherein the removable media further comprises the registry key (304) stored thereon.

9. Apparatus as in claim 6, wherein the removable media further comprises the namespace (204, 210).

10. Apparatus as in claim 6, wherein the removable media further comprises:
a. program code for causing the namespace (204, 210) to be created; and
b. program code for writing the initiation file (200) to a root directory (208, 214) of the namespace.
